# FASCICULE DE BREVET EUROPEEN

(11) **EP 1 638 353 B1**
(45) Date de publication et mention de la délivrance du brevet: **15.10.2008**
(21) Numéro de dépôt: 05291885.1
(22) Date de dépôt: 13.09.2005
(51) Int. Cl.: H04Q 7/22

(54) **Procédé et dispositif pour gérer un échange de messages entre deux entités communicantes**
Verfahren und Vorrichtung zur Verwaltung des Austausches von Nachrichten zwischen zwei Kommunikationseinrichtungen
Method and apparatus for managing an exchange of messages between two communication entities

(30) Priorité: 15.09.2004 FR 0409774
(43) Date de publication de la demande: 22.03.2006
(73) Titulaire: FRANCE TELECOM, 75015 Paris (FR)
(72) Inventeur: Zander, Sabine, 78220 Viroflay (FR); Potier, Aline, 92160 Antony (FR); Bellordre, Philippe, 75015 Paris (FR); Claramonte, Laurent, 75011 Paris (FR)
(74) Mandataire: Hassine, Albert

(56) Documents cités:
- EP-A- 1 148 748
- WO-A-03/096652
- US-A- 6 085 100
- US-B1- 6 178 331

## Description

L'invention concerne la messagerie dans le domaine des télécommunications, notamment liée aux messages courts (ou "*SMS*") et/ou aux messages multimédias (ou "*MMS*"), véhiculés dans un réseau quelconque, fixe ou radiofréquence (cellulaire ou non).

Plus particulièrement, la présente invention vise un échange bidirectionnel de messages SMS ou MMS entre le client d'un fournisseur de services et le client d'un opérateur en téléphonie mobile, ou fixe, ou encore dans un réseau local par exemple de type WLAN (pour "*Wireless Local Area Network*").

Le service MMS est un service de messagerie multimédia offert aux abonnés pour échanger des messages multimédias (MMS). Il permet également à des éditeurs de services d'échanger des messages avec des abonnés. Dans la mise en oeuvre de ce service, on prévoit un serveur (dit "*MMS Relay*/*Server*") dans le réseau et un "*client*" sur le terminal.

On indique que le "*client*" correspond à une application intégrée dans le terminal et permettant de composer, présenter, envoyer et recevoir les messages MMS.

Le MMS Relay/Server est le point d'entrée unique pour tous les messages envoyés par un utilisateur depuis son terminal. Il est responsable de l'envoi des MMS et des notifications pour le destinataire et assure le transfert de ces messages vers un autre serveur MMS Relay/Server, typiquement si le destinataire est l'abonné d'un autre opérateur. Cette notification se présente couramment comme un message court SMS qui déclenche, au niveau du client, la récupération du message multimédia.

On indique que les différents éléments multimédias peuvent coopérer et être synchronisés entre eux par l'utilisation d'un langage tel que SMIL (pour "*Synchronised Multimedia Integration Language*", langage normalisé). Les formats des différents éléments multimédias qui composent le message sont standards et normalisés (norme 3GPP). Aujourd'hui, les messages multimédias sont composés de texte, d'image et/ou de vidéo et d'audio.

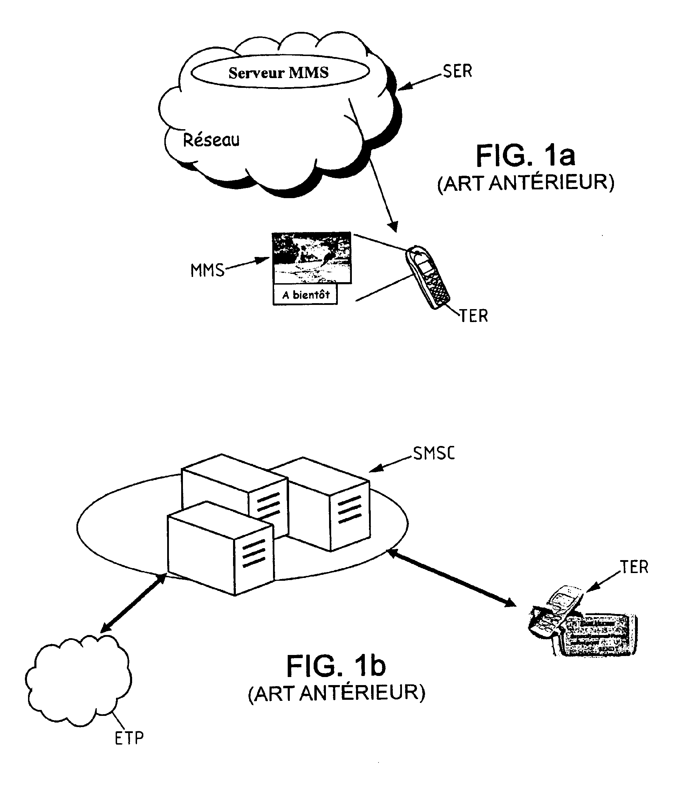

En référence à la figure 1a (art antérieur), lorsqu'un terminal TER reçoit d'un serveur MMS (référencé SER), via un réseau (par exemple mobile), un message MMS, celui-ci est composé :
- d'un en-tête MMS contenant notamment les informations telles que l'émetteur du message, le destinataire, l'objet du message (réponse, info, ou autre), et la date,
- du corps du message comprenant des éléments multimédia : texte, image, vidéo, son et présentation SMIL précitée.

Quant au service actuel de messagerie SMS, il permet aux abonnés d'un opérateur fixe ou mobile et aux éditeurs d'envoyer et de recevoir des messages sous forme de texte (dits ci-après "*messages SMS*") vers/depuis un terminal mobile ou fixe ou vers/depuis le site client d'un éditeur tiers. Les "*éditeurs*" précités peuvent être des tiers, ou encore des marchands, ou encore des fournisseurs de services, développant des services à base d'échanges de SMS, notamment interactifs.

La mise en oeuvre de ce service utilise un serveur dans un réseau mobile ou fixe qui gère la transmission (et, le cas échéant, la retransmission) des messages vers un terminal mobile ou fixe, ou vers un éditeur tiers de SMS.

Ce serveur est décrit notamment dans les normes 3GPP pour le service SMS en téléphonie mobile et dans la norme ETSI en téléphonie fixe.

En principe, ce serveur est composé de deux briques fonctionnelles désignées par SM-SC et SMS-GMSC/IWMSC, mais on retiendra simplement ici que le serveur peut être désigné ci-après par le sigle "*SMSC*".

Chaque éditeur tiers/marchand est identifié auprès d'un opérateur mobile/fixe par un ou plusieurs numéros courts de 3 à 5 digits. Généralement, un numéro court correspond à un service particulier (service "*Méteo*", service "*infos*", ou autres). Un exemple d'éditeur tiers/marchand est typiquement un fournisseur d'accès au réseau Internet.

En référence à la figure 1b (art antérieur), un éditeur ou marchand tiers particulier ETP peut échanger des messages SMS, via le réseau de l'opérateur SMSC, avec un terminal TER. Ces messages SMS sont composés de :
- un en-tête SMS (informations de routage et de traitement au niveau du terminal, notamment),
- un corps de message comportant le texte du message.

En technologie WLAN ("*Wireless Local Area Network*"), dans le contexte de l'invention, on établit un réseau local informatique sans utiliser de câblage pour les liaisons entre les ordinateurs/assistants personnels/téléphones mobiles. Ce câblage est remplacé par des liaisons radiofréquences.

Un intérêt de cette technique est de donner accès au réseau Internet sans fil, à hauts débits, dans des lieux publics. Dans de tels lieux publics, des zones dites "*hot spots*" correspondent à des zones de couverture radio limitées à quelques centaines de mètres. L'infrastructure WLAN est rapide à déployer pour un coût relativement faible. Toutefois, la confidentialité des informations traitées par les équipements et réseaux WLAN reste insuffisante.

En outre, la technologie WLAN ne permet pas une mobilité entre différents "*hot spots*" comme entre deux cellules d'un réseau GSM ou GPRS ou UMTS.

Néanmoins, certains opérateurs offrent un déploiement des "*hot spots*" WLAN en téléphonie mobile. Ainsi, via ces hot *spots*, les abonnés ayant des terminaux appropriés peuvent actuellement accéder à un réseau PLMN (pour "*Public Land Mobile Network*"), installé et géré par l'opérateur, et ce, conformément à la spécification 3GPP TS 23.234 ("*3GPP system to Wireless Local Area Network (WLAN) interworking; system description (release 6)*").

Dans le cadre de la présente invention, seuls les "*hot spots*" en lien avec un réseau PLMN seront pris en compte, tandis que les services fournis au terminal relié à un réseau WLAN directement par un "*hot spot*" sans lien avec un réseau PLMN ne sont pas pris en compte.

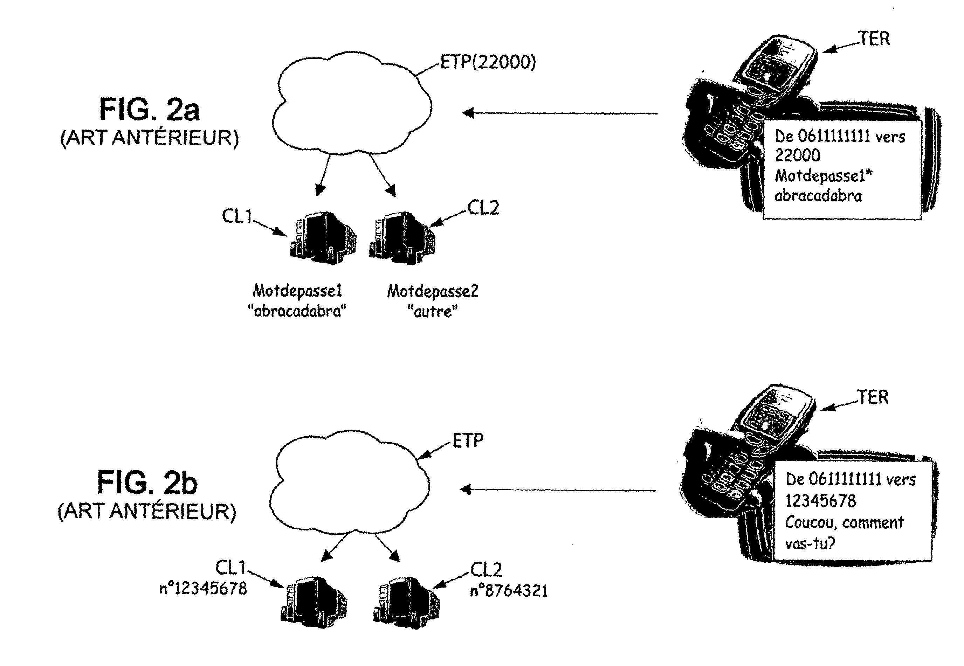

Actuellement, on connaît des réalisations de tiers (opérateurs mobiles, éditeurs tiers) pour les échanges SMS bidirectionnels entre un client d'un éditeur tiers et un terminal mobile (contexte de la figure 1b). Elles sont basées sur l'échange de mots de passe (figure 2a) ou sur l'utilisation d'un alias numérique authentifiant le destinataire (figure 2b).

Ces deux solutions présentent chacune un inconvénient.

Dans le cas d'un échange de mots de passe (figure 2a), l'identification du client CL1 du fournisseur de services ETP est réalisée grâce à l'utilisation d'un mot de passe ("*abracadabra*") temporaire ou figé, par l'utilisateur du terminal émetteur TER.

Dans le cas d'une utilisation d'un alias numérique (figure 2b), l'identification du client CL1 du fournisseur de services ETP s'effectue grâce à un alias temporaire ou figé ("*12345678*"). Il peut s'agir d'un numéro aléatoire attribué au client ou être composé en partie du numéro court associé au service du fournisseur et de digits complémentaires identifiant le client. Par exemple, il peut inclure :
- le numéro du service "*Météo*" : 22000;
- et l'identifiant du client : 123.
   L'alias attribué est : 22000123.

On indique en outre qu'actuellement, l'échange bidirectionnel des SMS ou MMS (appelés génériquement *"xMS"* ci-après) se limite à la description faite ci-avant dans le cadre d'échanges de SMS car il n'existe pas de mécanisme similaire pour l'échange de MMS.

Au sens de la présente invention, on cherche à permettre à un client d'un opérateur mobile, fixe, ou sur WLAN, possédant un terminal xMS de répondre à un client particulier de l'éditeur tiers. En particulier, la difficulté technique réside dans l'identification unique du destinataire du message.

Dans les cas présentés ci-avant d'échange de mots de passe et d'utilisation d'alias numérique, il est toujours possible de proposer ce service. Toutefois, on se heurte alors aux problèmes suivants :
- le cas d'échange de mot de passe nécessite la gestion du mot de passe par l'utilisateur mobile, ce qui apparaît comme une contrainte côté service,
- le cas d'utilisation d'alias numérique nécessite l'autorisation par l'opérateur mobile pour un tiers donné d'utiliser une tranche de numéros très grande. Or, de façon générale, les opérateurs souhaitent éviter ce type d'attribution (numéros comme 22000123). Un éditeur tiers ou marchand doit être préférentiellement authentifié par un numéro ou une liste très courte de numéros et ces numéros doivent être de 3 à 5 digits.

D'autre part, les deux cas précédents ne gèrent pas la situation plus complexe où le client d'un éditeur tiers souhaite utiliser plusieurs services proposés par son éditeur de service, et qui implique :
- la gestion de plusieurs mots de passe par l'éditeur et par ses correspondants mobiles,
- ou l'attribution de plusieurs numéros alias, pour autant de services, pour le client de l'éditeur tiers.

De plus, il n'existe actuellement aucun mécanisme de réponse :
- pour l'échange de messages multimédias MMS,
- ou pour l'échange de messages xMS entre certains réseaux et en particulier d'un réseau WLAN vers un fournisseur d'accès au réseau Internet.

La présente invention vient améliorer la situation.

L'un des buts de la présente invention est d'offrir aux clients d'un éditeur tiers (par exemple un fournisseur d'accès au réseau Internet) la possibilité d'échanger des xMS (donc SMS et/ou MMS) avec les abonnés d'un opérateur mobile, ou fixe, ou sur un réseau WLAN, sans contrainte pour l'utilisateur final et l'opérateur.

En particulier, un autre but de la présente invention est d'offrir un fonctionnement transparent vis-à-vis de l'opérateur mobile, fixe ou sur WLAN, en conservant une utilisation standard de numéros courts, en nombre limité, pour l'ensemble des services de l'éditeur tiers.

Un autre but de la présente invention est d'éviter des contraintes à l'abonné mobile, fixe, ou sur WLAN lors de sa réponse, sans qu'il ait ainsi une action particulière à mettre en oeuvre.

La présente invention propose à cet effet un procédé de traitement d'un échange de messages entre une première entité communicante et une deuxième entité communicante, la première entité étant cliente d'un éditeur de services, le procédé comportant :
a) une étape dans laquelle la première entité émet un message initial comportant, en en-tête, un identifiant de la première entité et un identifiant de la deuxième entité, au moins,
b) une étape d'affectation au message initial d'une référence et de stockage en mémoire, au moins temporaire, de ladite référence en correspondance au moins de l'identifiant de la première entité,
c) une étape dans laquelle le message initial est véhiculé via au moins un réseau de télécommunication vers la deuxième entité en fonction de l'identifiant de la deuxième entité,
d) une étape dans laquelle la deuxième entité envoie, en réponse au premier message, un deuxième message avec ladite référence en en-tête, en tant qu'identifiant de destinataire,
e) une étape de lecture de la référence dans l'en-tête du deuxième message, pour retrouver dans ladite mémoire, en fonction de la référence, l'identifiant de la première entité, et
f) une étape de transmission du deuxième message à la première entité, en fonction de l'identifiant de la première entité.

L'étape b) du procédé comporte en particulier :
b0) avant d'affecter une référence au message initial, une opération d'identification d'un opérateur de la deuxième entité communicante, et de sélection de ladite référence dans une liste de références réservée par l'éditeur de services auprès de l'opérateur identifié.

Selon un avantage que procure l'invention, un opérateur du réseau auquel est reliée au moins la deuxième entité n'a alors à gérer qu'une référence de format habituel, telle qu'un numéro court par exemple, pendant l'échange de messages.

Le document WO 03/096652 décrit un traitement d'échange de messages du type ci-avant, sans toutefois l'opération préalable b0) de l'étape b) du procédé selon l'invention.

Au sens de l'invention, le choix de la référence à cette étape s'effectue plus particulièrement dans une liste réservée par l'éditeur de services auprès de l'opérateur. Ainsi, l'opérateur gère une liste de références moins importante que dans l'état de l'art, du fait de la spécialisation de la liste qu'il gère. Il n'est plus obligé de connaître l'ensemble des numéros courts réservés par l'éditeur de services auprès de l'ensemble des opérateurs mobiles, fixes ou WLAN. Il est également possible pour l'éditeur de services de réserver les mêmes références auprès de chaque opérateur.

Comme indiqué ci-avant, la référence précitée peut avantageusement être un numéro court qui comporte alors moins de digits que l'identifiant de la première entité, par exemple entre trois et cinq digits.

Dans une réalisation préférée, il est prévu une étape de stockage, en outre dans ladite mémoire et en correspondance de la référence, l'identifiant de la deuxième entité, de manière à retrouver ensuite l'identifiant de la première entité dans ladite mémoire, à la fois en fonction de la référence et au moins de l'identifiant de la deuxième entité.

Avantageusement, la référence peut alors être stockée en mémoire, en correspondance d'un triplet comportant :
- un identifiant de la première entité,
- un identifiant de la deuxième entité,
- et un identifiant de service,
de sorte que l'identifiant de la première entité est retrouvé à partir : de la référence, de l'identifiant de la deuxième entité et de l'identifiant de service.

On comprendra ainsi que, selon l'un des avantages que procure la présente invention, il peut être prévu d'affecter initialement à l'éditeur une liste restreinte de références possibles, avec une possibilité d'affecter une même référence pour des échanges impliquant deux deuxièmes entités différentes et/ou impliquant deux services différents, l'identifiant de la deuxième entité et l'identifiant de service contribuant alors à augmenter la sélectivité de la recherche de l'identifiant de la première entité en fonction de la référence.

Dans un mode de réalisation avantageux, l'étape b) comporte l'ouverture d'une session d'allocation de référence pour l'échange de messages entre lesdites première et deuxième entités. En particulier, on affecte à cette session une durée de validité prédéterminée, autorisant, pendant cette durée de validité, l'utilisation de la référence pour émettre, en réponse au premier message, au moins un second message.

Avantageusement, on accorde une première durée de validité à une session, lors de la transmission d'un premier message, et une deuxième durée de validité à la même session, lors de la transmission d'un second message, ce qui permet notamment de conserver la même référence dans le cas d'une pluralité d'échanges de message.

Préférentiellement, on prévoit d'affecter en outre à une session un état *"en cours d'expiration",* intermédiaire entre un état actif et un état expiré. Une session, dont la durée de validité est déjà périmée, est susceptible d'être réactivée si l'on parvient à identifier, par exemple à l'étape e), un message comportant une référence qui est associée à un état *"en cours d'expiration",* dans la mémoire précitée.

Dans une réalisation préférée, on prévoit un nombre limité de sessions actives et de sessions "*en cours d'expiration*". Préférentiellement, on fait alors passer une session de l'état *"en cours d'expiration"* à l'état expiré lorsque l'on souhaite générer par ailleurs une nouvelle session qui doit être activée.

De préférence, on accorde en outre un nombre maximum de messages échangés pendant une session, ce qui permet notamment de limiter les risques de surcharge d'un dispositif relais mettant en oeuvre au moins les étapes b), e) et f) du procédé au sens de l'invention.

Ce dispositif comporte avantageusement la mémoire précitée et est interconnecté avec le ou les réseaux de télécommunication précités.

On indique que cette mémoire est préférentiellement hiérarchisée selon une base de données, en fonction desdites références.

En outre, le procédé au sens de l'invention peut s'adapter à tout type de réseau. Ainsi, le ou les réseaux de télécommunication précités peuvent comporter au moins un réseau fixe et/ou un réseau cellulaire et/ou un réseau radiofréquence de type WLAN.

Bien entendu, la présente invention vise aussi un dispositif relais du type précité et comportant au moins :
- une ou plusieurs interfaces avec ledit un ou plusieurs réseaux, et
- un module de contrôle d'attribution et de gestion des références.

Avantageusement, ce module inclut la mémoire précitée, en tant que base de données hiérarchisée en fonction des références.

Ce module est préférentiellement capable de coopérer avec une deuxième base de données propre à différents types de services, et agencée pour stocker en outre un ou des identifiant(s) d'opérateur(s) d'au moins un réseau auquel la deuxième entité est connectée.

A cet effet, le dispositif comporte avantageusement des moyens pour coopérer avec un module d'identification de ce ou ces opérateur(s).

Le dispositif au sens de l'invention comporte avantageusement des moyens pour coopérer avec un module de routage des messages initiaux vers l'opérateur du réseau auquel la deuxième entité est reliée, et d'adaptation de ces messages initiaux à un protocole de ce réseau.

Préférentiellement, le dispositif comporte en outre une mémoire de stockage temporaire des messages, en tant que base de données des messages reçus, pour mettre en attente de traitement des messages nouvellement reçus, notamment pendant des traitements de messages en cours.

Avantageusement, le dispositif comporte en outre un module d'adaptation des messages qui est agencé pour coopérer avec le module de contrôle d'attribution et de gestion des références, pour :
- recevoir une référence attribuée,
- désencapsuler un message reçu de la première entité,
- modifier l'en-tête d'un message en remplaçant l'identifiant de la première entité par la référence attribuée, et
- encapsuler le message reçu, avec l'en-tête comportant la référence, pour une transmission vers la deuxième entité.

Avantageusement, le dispositif est agencé pour coopérer avec une interface d'adaptation d'un format des messages issus et/ou à destination de la première entité, incluant un ou plusieurs convertisseurs de protocole.

La présente invention vise aussi un produit programme informatique, destiné à être stocké dans une mémoire d'un dispositif relais du type ci-avant, ou sur un support mémoire amovible destiné à coopérer avec un lecteur que comporterait ce dispositif relais. Ce produit programme comporte alors des instructions pour la mise en oeuvre de tout ou partie des opérations des étapes b), e) et f), au moins, du procédé selon l'invention.

D'autres caractéristiques et avantages de l'invention apparaîtront à l'examen de la description détaillée ci-après, et des dessins annexés sur lesquels, outre les figures 1a, 1b, 2a et 2b relatives à l'art antérieur et décrites ci-avant :
- la figure 3 illustre schématiquement le contexte général de mise en oeuvre d'un dispositif 40 au sens de l'invention,
- la figure 4 illustre schématiquement des modules et interfaces du dispositif 40,
- la figure 5 représente les interactions entre différents constituants d'un module coeur 42 du dispositif 40,
- la figure 6 représente schématiquement le fonctionnement dynamique du dispositif 40, pendant un échange de messages xMS,
- la figure 7 représente schématiquement le fonctionnement dynamique du dispositif 40, pendant un échange de messages xMS impliquant des utilisateurs de différents types de réseaux, et
- la figure 8 illustre schématiquement les mécanismes d'allocation de session, depuis une requête reçue par le dispositif 40 jusqu'à la réponse produite.

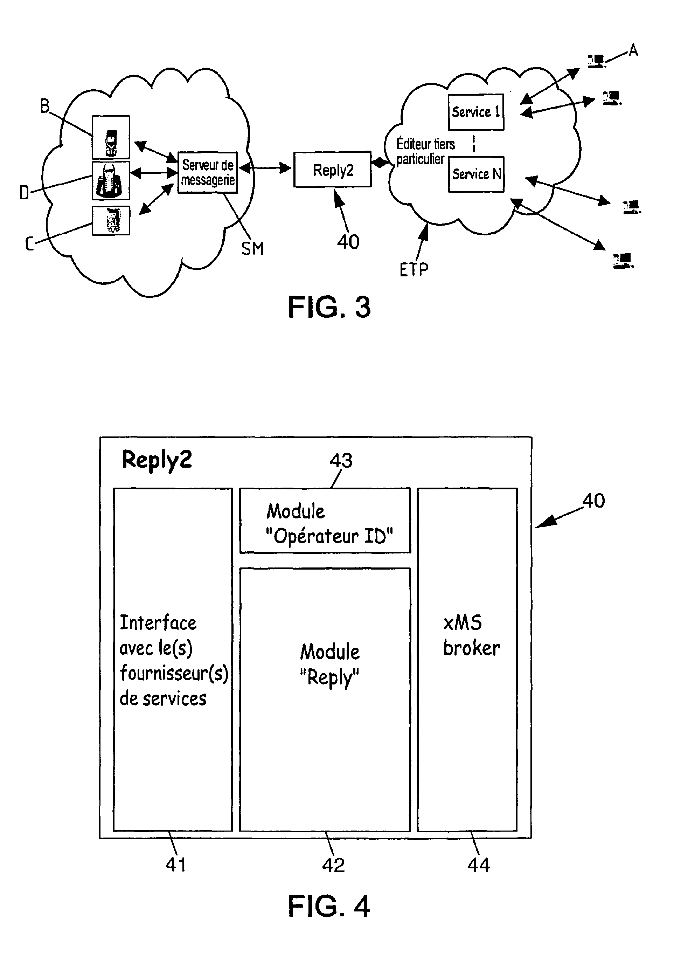

Avant de décrire un mode de réalisation préféré de l'invention, on donne ci-après quelques définitions en référence à la figure 3, sur laquelle un client A d'un éditeur tiers particulier ETP de services (service 1 ... service N) envoie un message routé par une unité 40 au sens de l'invention, et appelée ci-après "*brique Reply2*", vers un serveur de messagerie SM auquel est relié un utilisateur B d'un réseau mobile ou fixe (référence D), ou d'un réseau WLAN (référence C).

Tout d'abord, un "*Service ID*" permet d'identifier le type de service proposé par le fournisseur de service (dont A est le client). Il s'agit d'une chaîne numérique ou alphanumérique caractérisant de manière unique un service. L'administrateur de l'unité Reply2 40 doit veiller à ce que le Service ID soit unique dans le cas où un ou plusieurs fournisseurs de services utilisent l'unité Reply2.

Une "*Session*" est une période pendant laquelle un dialogue peut être établi entre un client A d'un fournisseur de services et un abonné B mobile, fixe ou sur WLAN (de numéro de téléphone B). Durant la période de validité de la session, il est possible pour A et B d'envoyer/recevoir plusieurs messages. Cette session se base sur le triplet :
- adresse de A, notée @A,
- numéro de téléphone de B, et
- Service ID.

Si A souhaite envoyer un message à un utilisateur C, la session sera différente de la session attribuée à A pour l'envoi d'un message vers B.

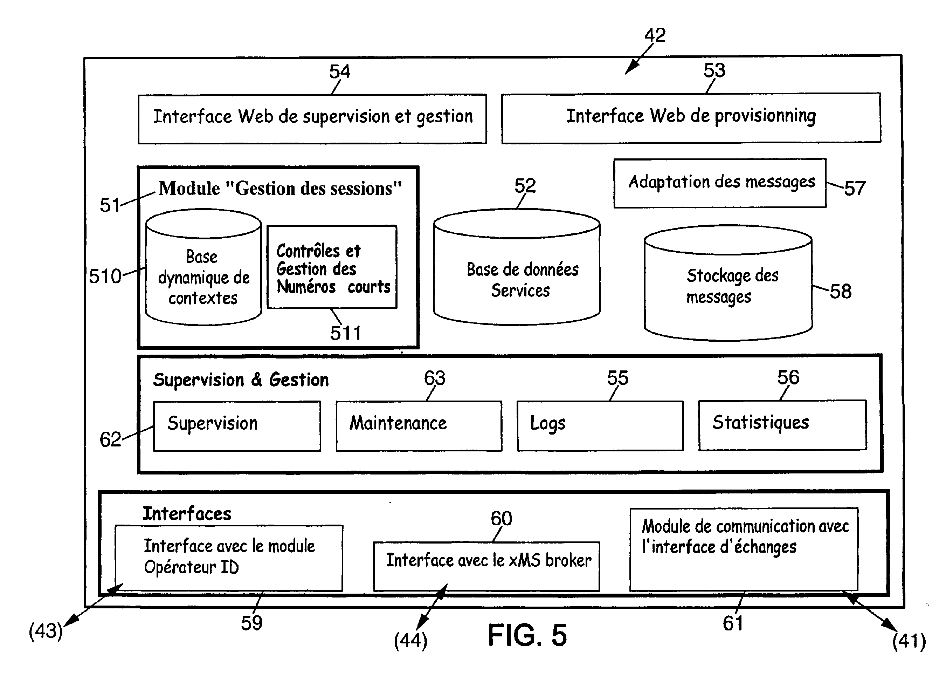

La durée de vie de la session est programmée dans la base de données des services 52 (décrite plus loin en référence à la figure 5) et réinitialisée à chaque envoi de messages entre les utilisateurs A et B.

Un *contexte* est l'ensemble des éléments permettant de définir une session. Ici, il est composé du quadruplet :
- @A,
- le numéro de téléphone de B,
- le Service ID,
- et une référence associée, telle qu'un numéro court (comportant typiquement 3 à 5 digits).

Une minuterie ou "*Timer*" est un paramètre lié à la notion de temps en informatique. Il a une valeur temporelle. C'est l'équivalent d'un chronomètre qui peut se réinitialiser ou bien s'arrêter lorsqu'il a atteint sa valeur préalablement définie.

La *Base de données des Services* contient l'ensemble des paramètres liés au service (par exemple la description du service, le login, le mot de passe, les numéros courts associés à l'identifiant de l'opérateur du réseau de téléphonie mobile ou du réseau de téléphonie fixe ou d'un réseau WLAN (désigné ci-après par "*opérateur mobile*/*WLAN*/*fixe*"), le Service ID, le protocole utilisé par le fournisseur de services, et autres).

Le *xMS broker* permet de router les messages vers le bon réseau mobile/WLAN/fixe de l'opérateur et vers le bon fournisseur de services. Il peut être intégré à un ensemble de services d'un fournisseur particulier ou être un fournisseur à part qui propose ce type de services incluant par exemple :
- le routage du message xMS,
- l'adaptation au réseau mobile/WLAN/fixe,
- l'adaptation au protocole d'interface du fournisseur de services.

L'unité 40 ou "*brique Reply2*", au sens de l'invention, peut se composer avantageusement par les modules fonctionnels de la figure 4.

Un premier module consiste en une interface 41 avec le(s) fournisseur(s) de services pour adapter le xMS au format adéquat attendu par les fournisseurs de service, d'une part, et par la brique Reply2 40, d'autre part. Ce module 41 intègre donc plusieurs sous-modules convertisseurs de protocole. Par exemple, pour le traitement de messages SMS, ce module 41 peut inclure un convertisseur UCP, un convertisseur SMPP, HTTP, HTTPS, ou autres. Pour le traitement des MMS, il peut inclure un module SOAP (normalisé dans la spécification 3GPP 23.140). Ce module 41 est optionnel et peut ne pas être prévu. Typiquement, s'il est absent, l'administrateur de la brique Reply2 40 peut préférentiellement prévoir de raccorder la brique 40 à un fournisseur de service gérant cette interface 41.

Le module "*Reply*" 42, au sens de l'invention, gère l'allocation et la gestion des sessions ainsi que la modification de l'identifiant de l'abonné de l'éditeur tiers, initiateur de la session. Il est décrit en détail plus loin.

Le module "*Opérateur ID*" 43 gère l'identification de l'opérateur mobile/WLAN/fixe suivant le numéro de l'abonné destinataire mobile/WLAN/fixe, prévu et stocké dans une base de données. Cette base est mise à jour, de préférence par l'administrateur de la brique Reply2 40. On indique que l'administrateur peut notamment récupérer des données d'une base externe de portabilité de numéros mobiles. Ce module 43 est optionnel et, en particulier, peut avantageusement être supprimé si les numéros courts fournis par un opérateur mobile/WLAN/fixe sont identiques à ceux fournis par tous les autres opérateurs mobiles/WLAN/fixes.

Le module xMS broker 44 correspond à une interface qui gère le routage des messages xMS vers le bon opérateur mobile/WLAN/fixe ainsi que l'adaptation du message au protocole attendu par l'opérateur mobile/WLAN/fixe. Comme le module 41, le xMS broker 44 est optionnel et peut être supprimé si l'administrateur de la brique Reply2 40 prévoit plutôt de raccorder la brique 40 à un fournisseur de service réalisant la fonction du xMS broker décrite ci-avant.

On décrit maintenant le module "*Reply*" 42, en référence à la figure 5. On notera tout d'abord la combinaison, au sens de l'invention, du module 51 de gestion de sessions et de la Base de sonnées Services 52. On indique toutefois que d'autres modules sont avantageux pour la mise en oeuvre d'une plate-forme incluant la brique Reply2 dans un réseau, et sont décrits ci-après.

L'interface Web de supervision et gestion 54 est une interface Web graphique liée à la gestion et supervision des modules *Logs* 55, *Statistiques* 56 et de gestion de sessions 51.

L'interface WEB de *provisionning* 53 est une interface Web graphique qui permet les entrées et/ou modifications et/ou suppressions de données dans la base de données Services 52.

Le module "*Gestion des sessions*" 51 gère de manière dynamique les contextes de sessions, les mécanismes d'attribution de numéros courts et les contrôles associés (module 511). Toutes les données dynamiques sont lues/écrites/mises à jour dans la base dynamique de contextes 510. L'allocation de sessions et en particulier l'attribution d'une référence, telle qu'un numéro court, est alors réalisée par ce module 51.

La Base de données Services 52 stocke les paramètres suivants : description du service, login, mot de passe, numéros courts associés à l'identifiant de l'opérateur mobile/WLAN/fixe, Service ID, protocole utilisé par le fournisseur de services, ou autres.

Typiquement, la Base de données Services 57 répertorie pour chaque service des paramètres gérés par l'administrateur de la brique "Reply2" 40. Ces paramètres sont dynamiquement pris en compte lorsqu'ils sont rentrés dans la base. Si un service est supprimé, l'opérateur doit confirmer la suppression via l'interface de provisionning 53 et une commande est lancée vers la base dynamique de contexte 510 pour supprimer toutes les sessions en cours relatives à ce service.

Une liste non exhaustive d'exemples de paramètres par service peut être la suivante :
- Service ID,
- SERVICENAME (nom de service),
- une liste des numéros courts attribués avec l'identifiant de l'opérateur mobile/WLAN/fixe associé,
- une durée de vie d'une session (à l'initialisation) T1 comportant par exemple "*x*" minutes,
- une durée de vie d'une session (effective) T2, comportant par exemple "*y*" minutes,
- un nombre z d'échanges de messages xMS,
- un protocole d'échange avec le fournisseur de service.

Par ailleurs, la base dynamique de contextes 510 peut contenir les informations non exhaustives suivantes:
- adresse du client de l'éditeur de service, notée @A,
- le numéro de téléphone du destinataire B,
- Service ID
- la référence associée au contexte (par exemple un numéro court),
- la minuterie ou *Timer* relatif à la durée de vie de la session (valeur maximale égale à T1 ou T2).

Dans ce qui suit, on désignera la référence précitée, associée au contexte, par les termes "*numéro court*".

La base de Stockage des messages 58 stocke les messages xMS pendant l'attribution ou la recherche de session.

On indique que les bases de données précitées peuvent correspondre, dans une mise en oeuvre pratique, à des mémoires de stockage hiérarchisées en fonction d'identifiants tels que les numéros courts ou des paramètres de service comme indiqué ci-avant.

Le module d'adaptation des messages 57 permet typiquement de modifier les adresses des messages xMS, comme on le verra plus loin.

Le module Logs 55, pour la supervision et la gestion du traitement des messages, comporte une base de données pour stocker chaque transaction pendant un délai spécifié par l'administrateur. On peut choisir de stocker d'autres traces additionnelles.

Le module Statistiques 56 comporte une mémoire pour stocker des statistiques sur le module "*Reply*", en particulier des informations concernant le trafic et les performances du traitement.

Le module 59 agit en tant qu'interface avec le module Opérateur ID 43 de la figure 4. Le module Opérateur ID 43 fournit au module "*Reply*" 42, via cette interface 59, l'identifiant de l'opérateur mobile/WLAN/fixe concerné par l'échange du message xMS.

Le module 60 agit en tant qu'interface avec le xMS broker 44 de la figure 4. Les messages xMS sont échangés avec le xMS broker via cette interface 60.

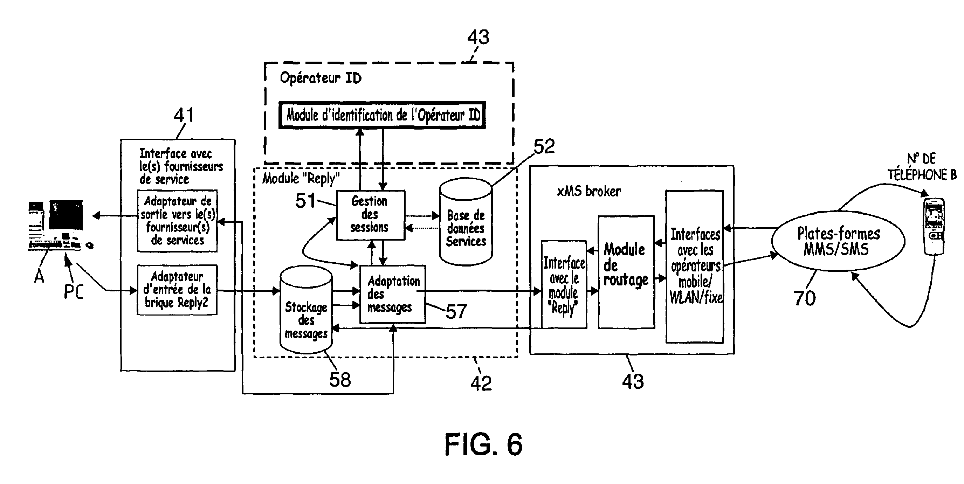

Le module 61 agit en tant qu'interface avec le module 41 de la figure 4 pour adapter les formats des messages xMS reçus de/transmis vers les fournisseurs de services (figure 6).

On indique que l'on prévoit en outre, de préférence, un module de supervision 62, par exemple pour générer des alertes et un module de maintenance 63. La liste des sessions actives doit être disponible et elle est préférentiellement fournie par ce module de supervision 62. La possibilité de réinitialiser ou suspendre une session ou un groupe de sessions à tout instant est offerte à l'administrateur.

On se réfère maintenant à la figure 6 pour décrire le fonctionnement dynamique des échanges de message par l'intermédiaire du module "*reply*" au sens de l'invention.

On décrit d'abord l'émission d'un message d'un utilisateur A, d'adresse @A, et client d'un service identifié par Service ID, vers un utilisateur B, de numéro de téléphone B (mobile dans l'exemple représenté).

Dans l'exemple représenté, l'ordinateur de A envoie un message xMS à destination de l'utilisateur B (identifié par son numéro de téléphone). L'ordinateur PC de A utilise l'un des services de l'éditeur tiers chez qui il est client. Ce service est identifié par Service ID.

Le message xMS parvient ensuite au module "*Reply*" 40 qui va le stocker, dans un premier temps, dans la base 58. Une demande d'affectation d'un code court pour ouvrir une session est ensuite initiée grâce au module 57 d'adaptation des messages vers le module 51 de gestion des sessions.

Le module "*Reply*" 42 interroge le module "*Opérateur ID*" 43 pour connaître l'identifiant de l'opérateur destinataire mobile/WLAN/fixe. A cet effet, le module *Reply* 42 fournit le numéro de téléphone de l'utilisateur B. Le module 43 envoie ensuite un identifiant Operator ID de l'opérateur mobile/WLAN/fixe au module "*Reply*" 42, lequel vérifie alors, dans la base dynamique de contextes du module 51, si une session relative au triplet (@A, numéro de téléphone B, Service ID) est déjà active. En particulier :
- si aucune session n'est active, la base de données Services 52 est interrogée à l'aide du couple : Service ID et Operator ID. La liste des numéros courts disponibles associés à ce couple est transmise au module de gestion des numéros courts du module 51 qui alloue de manière aléatoire un numéro court Y. La base dynamique de contextes est remise à jour avec le quadruplet (@A, numéro de téléphone B, Service ID, Y). La durée de validité de la session ainsi créée est initialisée. Le message xMS est modifié via le module 57 d'adaptation des messages. Ainsi, l'adresse origine du message prend la valeur du numéro court Y ;
- si la session est déjà active et le numéro court associé est Y, le message xMS est modifié grâce au module d'adaptation des messages 57 : l'adresse origine du message prend la valeur du numéro court Y et la période de validité de la session est alors réinitialisée.

La communication se poursuit par l'envoi du message vers le module *xMS broker* 43 qui va adapter le message au protocole de l'opérateur mobile/WLAN/fixe et qui va router le message vers la plateforme xMS 70 appropriée de l'opérateur destinataire. Le message est ensuite envoyé vers l'opérateur destinataire qui l'oriente finalement vers l'abonné B. Ici, on indique simplement qu'au préalable :
- dans le cas où le message est un MMS, il est transmis à un serveur MMS Relay Server (non représenté) via une interface de protocole adéquat, tel que MM7, avec les paramètres suivants :
   o @émetteur, correspondant au numéro court Y, et
   o @destinataire, correspondant au numéro de téléphone B,
   où le sigle "@*X*" désigne, bien entendu, l'adresse d'une entité X ;
- et dans le cas où le message est un SMS, il sera transmis au réseau SMSC (non représenté) via une interface de protocole adéquat, tel que UCP, SMPP, CIMD2 ou autre, avec les paramètres suivants :
   o @émetteur, correspondant au numéro court Y, et
   o @destinataire, correspondant au numéro de téléphone de B.

Le destinataire B reçoit alors le message xMS.

On décrit maintenant le transfert de la réponse de l'abonné B vers l'utilisateur A.

Lorsque l'abonné B répond au message reçu, on considère logiquement qu'il envoie :
- un message MMS suite à la réception d'un message MMS, et
- un message SMS suite à la réception d'un message SMS,
et en conservant à l'esprit que l'adresse de destination de ce message est le numéro court Y.

Le message est transmis via l'infrastructure xMS de l'opérateur mobile/WLAN/fixe, décrite ci-avant, et en particulier :
- dans le cas ou le message est de type MMS, ce dernier est renvoyé à la brique Reply2 via une interface de protocole tel que MM7 avec les paramètres suivants :
   o @émetteur, correspondant maintenant au numéro de téléphone de B, et
   o @destinataire, correspondant maintenant au numéro court Y ;
- dans le cas ou le message est de type SMS, ce dernier est renvoyé à la brique Reply2 via une interface de protocole tel que UCP, SMPP, CIMD2 ou autre, avec les paramètres suivants :
   o @émetteur, correspondant au numéro de téléphone de B, et
   o @destinataire, correspondant au numéro court Y.

Le module *xMS broker* 43 transmet le message xMS au module "*Reply*" 42, lequel stocke le message dans la base 58, puis interroge la base dynamique de contextes du module 51 avec le couple : numéro de téléphone B et numéro court Y.

Si ce contexte est présent dans la base, alors la période de validité de la session est réinitialisée. En particulier, l'adresse @A (d'origine) est récupérée.

Ensuite, le message xMS est modifié par le module d'adaptation des messages 57 et l'adresse destinataire du message prend donc la valeur @A.

Si ce contexte n'existe pas, alors un message d'erreur est retourné à l'abonné B, par exemple un message du type :
"*envoi impossible car délai de transmission expiré*". Le message xMS est transmis ensuite au module interface 41 vers le(s) fournisseur(s) de services avec les informations :
   - Service ID,
   - et le protocole d'échanges du fournisseur issu de la base de données Services 52. Ces informations permettent d'aiguiller le message vers le bon convertisseur de protocole.

Finalement, le message est transmis au fournisseur de services avec les adresses suivantes :
- @A correspondant à l'adresse destinataire,
- le numéro de téléphone de B, en tant qu'adresse de l'émetteur,
- et éventuellement "*Service ID*" correspondant au service destinataire.
Le fournisseur aiguille alors le message vers l'utilisateur A.

On comprendra ainsi que, de manière générale, la brique Reply2 40 assure le bon aiguillage des messages xMS entre le client A d'un fournisseur de services et le terminal B d'un opérateur mobile/WLAN/fixe, en particulier en mettant préférentiellement en oeuvre un mécanisme avantageux de sessions temporairement allouées. Cette brique Reply2 peut être gérée par l'opérateur mobile/WLAN/fixe, par le fournisseur de services ou encore par un fournisseur tiers (via un *xMS broker,* comme on l'a vu précédemment).

Dans une réalisation avantageuse, les fonctionnalités principales de la brique Reply2 sont les suivantes :
- de préférence, formatage du message xMS avant son envoi vers le réseau du fournisseur ou de l'opérateur mobile/WLAN/fixe,
- de préférence, stockage du message xMS pendant les traitements,
- allocation et gestion de sessions,
- attribution d'un numéro court pour permettre les échanges entre le client d'un fournisseur de services et le client d'un opérateur mobile/WLAN/fixe,
- de préférence, gestion des listes de numéros courts autorisés par l'opérateur mobile/WLAN/fixe,
- modification de l'identifiant de l'abonné de l'éditeur tiers, initiateur de l'ouverture de la session,
- gestion des identifiants des opérateurs mobiles/WLAN/fixes.
- routage du message vers le bon opérateur mobile/WLAN/fixe suivant l'adresse de l'abonné mobile/WLAN/fixe.

Ainsi, la fonctionnalité de la brique "Reply2" permet à un client d'un opérateur mobile/fixe/WLAN possédant un terminal xMS de répondre à un client particulier d'un éditeur tiers, avantageusement par la mise en oeuvre d'un mécanisme de sessions temporaires allouées.

On a décrit ci-avant un échange de messages xMS entre un utilisateur A titulaire d'un ordinateur PC et un abonné B titulaire d'un téléphone mobile. Toutefois, la présente invention s'applique à des échanges entre des utilisateurs de différents réseaux mobiles/WLAN/fixes, comme décrit ci-après.

On rappelle au préalable qu'un serveur de messagerie fait typiquement référence à :
- un réseau SMSC dans le cas d'échange de messages courts SMS, et
- à un serveur MMS Relay/Server dans le cas d'échange de messages multimédias MMS.

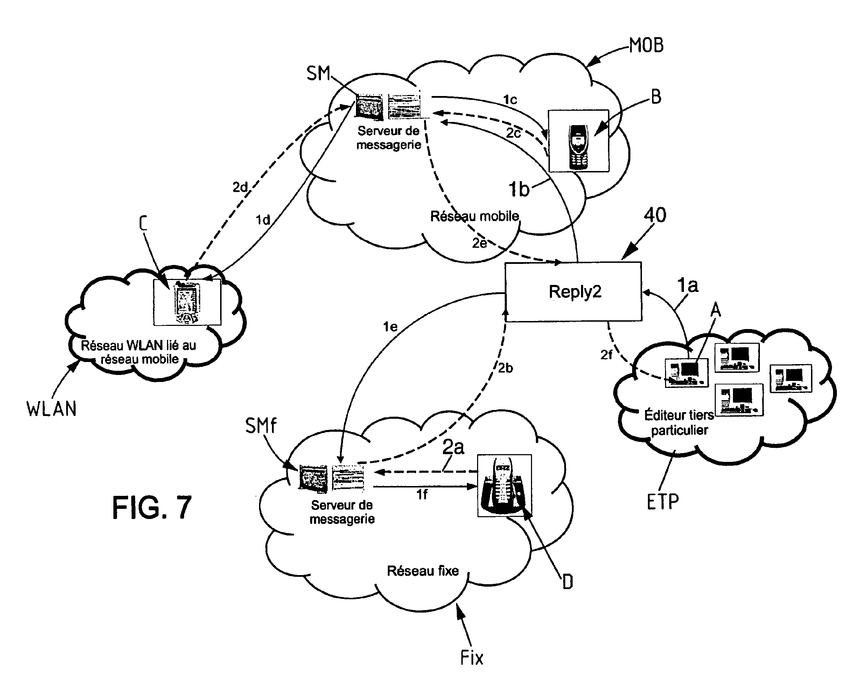

On considère, en référence à la figure 7, un premier cas selon lequel les messages originaires d'un client d'un éditeur tiers particulier sont à destination d'un terminal xMS mobile ou d'un terminal xMS fixe ou d'un terminal xMS WLAN.

Un abonné A d'un éditeur tiers particulier ETP choisit d'utiliser un service de communication offert par cet éditeur, tel qu'un service de clavardage ou "*chat*" en vocable anglo-saxon, de messagerie instantanée, de MMS, ou autres. L'abonné A compose un message xMS à l'aide d'une interface de composition adéquate (par exemple à l'aide d'une interface WEB de composition de SMS ou de MMS). Après avoir composé son message et indiqué l'adresse du destinataire (le numéro de téléphone fixe, mobile ou sur WLAN du destinataire), il envoie son message (flèche 1a).

Le message est relayé vers la brique Reply2 portant la référence 40. On rappelle que cette brique 40 assure préférentiellement les actions suivantes:
- vérification que le message xMS envoyé est au bon format,
- stockage temporaire du message xMS pendant les traitements internes,
- allocation d'une session temporaire si elle n'existe pas déjà, sur la base des paramètres suivants :
   o Identifiant de l'abonné de l'éditeur tiers qui initie l'ouverture de la session,
   o Adresse de l'abonné mobile/WLAN/fixe,
   o Identifiant du service de communication choisi par l'abonné de l'éditeur tiers,
   ces paramètres formant un triplet.

L'allocation de la session se traduit avantageusement par l'attribution d'un numéro court (3 à 5 digits). Ce numéro court fait partie d'une liste de numéros courts qu'attribue préalablement l'opérateur mobile/WLAN/fixe à l'administrateur de la brique "Reply2" 40. Cette étape implique au préalable l'identification de l'opérateur mobile/WLAN/fixe de l'abonné destinataire.

Ensuite, le message xMS est modifié :
- en remplaçant l'adresse de l'abonné émetteur par ce numéro court,
- en le formatant au protocole d'interface du serveur de messagerie destinataire (par exemple protocole SMPP pour le réseau SMSC, ou protocole SOAP pour un MMS Relay/Server).

La brique Reply2 40 route ensuite (flèche 1b) ce message xMS vers le serveur de messagerie adéquat de cet opérateur (par exemple le réseau SMSC si le message est un SMS, ou vers le MMSC si le message est un MMS).

Si le destinataire du message est un utilisateur B d'un réseau mobile MOB, le serveur de messagerie SM de l'opérateur mobile doit accomplir les actions suivantes (flèche 1c) :
- s'il s'agit d'un serveur MMS Relay/Server, transférer le message multimédia au mobile MMS destinataire (conformément à la spécification 3GPP 23.140),
- s'il s'agit d'un serveur SMSC, transférer le message court SMS au mobile destinataire (conformément à la spécification 3GPP 23.040).

Si le destinataire du message est un utilisateur xMS sur réseau WLAN, le serveur de messagerie de l'opérateur mobile SM doit accomplir les actions suivantes (flèche 1d) :
- s'il s'agit d'un serveur MMS Relay/Server, transférer le message multimédia au terminal WLAN MMS destinataire C,
- s'il s'agit d'un réseau SMSC, transférer le message court au terminal SMS WLAN destinataire (conformément à la spécification 3GPP 23.234).

Enfin, si le destinataire du message est un utilisateur xMS sur réseau fixe FIX, la brique Reply2 40 route le message xMS au serveur de messagerie SMf du terminal fixe D (réseau SMSC du fixe ou serveur MMS Relay/Server du fixe selon la nature du message xMS).

On indique toutefois qu'une variante consiste à prévoir une mutualisation des plates-formes des réseaux fixe et mobile, c'est-à-dire une utilisation d'un seul réseau SMSC ou MMS Relay/Server pour les deux réseaux, fixe et mobile.

Finalement, le serveur de messagerie du fixe SMf (par exemple le réseau SMSC fixe ou le serveur MMS relay/Server fixe) transfère le message (respectivement SMS ou MMS) au terminal xMS fixe destinataire D. Cette opération est conforme à la spécification ETSI MMS fixe (pour les messages MMS) ou à la spécification ETSI SMS fixe (pour les messages SMS).

On décrit maintenant le cas d'un retour du message, soit donc un message envoyé d'un terminal MMS mobile B (2.5 G/3G) ou d'un terminal MMS fixe D ou d'un terminal MMS WLAN C et à destination d'un client A d'un éditeur tiers particulier ETP.

Pour le cas du terminal xMS fixe D, ce dernier peut émettre (flèche 2a) un message xMS (tel que spécifié dans les normes ETSI MMS ou SMS du fixe). Dans ce cas, le serveur de messagerie du réseau fixe SMf transfère le message xMS vers la brique Reply2 40 (flèche 2b).

Par ailleurs, un terminal xMS mobile B peut émettre (flèche 2c) un message xMS (tel que spécifié dans la norme 3GPP 23.140 s'il s'agit d'un message MMS ou 3GPP 23.040 s'il s'agit d'un message SMS).

Par ailleurs, un terminal xMS WLAN C peut émettre (flèche 2d) un message xMS. L'émission d'un message texte par un terminal SMS WLAN se fait en accord avec la spécification 23.234.

Le serveur de messagerie mobile (flèche 2e) transfère le message xMS vers la brique Reply2 40. Celle-ci assure les actions suivantes :
- contrôle préalable que la session entre le client de l'éditeur de service et l'émetteur du message xMS courant existe. Si la session n'existe pas, envoi d'un message d'erreur à l'émetteur du message xMS. Si la session existe, les procédures suivantes s'appliquent,
- formatage du message xMS au format attendu par l'éditeur de services,
- sur la base de l'adresse de l'abonné mobile/WLAN/fixe et du numéro court destinataire, recherche du triplet :
   o Identifiant de l'abonné de l'éditeur tiers, qui initie l'ouverture de la session ;
   o adresse de l'abonné mobile/WLAN/fixe ; et
   o identifiant du service de communication choisi par l'abonné de l'éditeur tiers,
- et remplacement de l'adresse destinataire dans le message xMS par l'identifiant de l'abonné de l'éditeur tiers spécifiée dans le triplet.

Ensuite, la brique Reply2 40 envoie finalement (flèche 2f) le message xMS vers l'abonné destinataire, à l'aide du service approprié (correspondant au service pour lequel l'émetteur et le destinataire sont en relation, tel qu'un service de chat, un service de messagerie instantané, service MMS, ou autre).

On comprendra ainsi que l'application de l'invention peut être généralisée à un échange entre le client d'un éditeur tiers particulier et un utilisateur de tout type de réseau (fixe, ou mobile, ou encore WLAN).

On décrit ci-après des exemples de mécanismes de sessions et d'attribution de numéros courts, au sens de l'invention.

On rappelle que l'invention permet à un client B d'un opérateur mobile/WLAN/fixe d'adresser des messages xMS à destination du bon client A d'un éditeur de services. On recherche donc la solution la plus transparente possible pour les opérateurs mobile/WLAN/fixe et pour les éditeurs de services.

Le cas le plus général se présente comme suit :
- le client A d'un éditeur tiers envoie un message à un client B d'un opérateur mobile/fixe/WLAN,
- le client B reçoit le message et y répond,
- le client A reçoit cette réponse dans une "*boîte xMS*".

La brique "*reply2*" 40 permet de gérer des sessions à travers l'utilisation des numéros courts (par exemple 3 à 5 digits utilisés couramment par les opérateurs mobile/WLAN/fixe). Un éditeur de services peut réserver auprès des opérateurs mobile/WLAN/fixe une liste de numéros courts, comme indiqué ci-avant, en vue d'avoir un nombre correspondant de sessions disponibles. Cette liste de numéros courts peut être partagée entre les différents services d'un même éditeur mais il est également possible, voire préférable, de dédier plusieurs numéros courts à un service particulier.

En outre, on associe initialement un nombre N de numéros courts à un service d'un éditeur tiers. Seuls N clients comme le client A peuvent dialoguer via le même service avec un même correspondant donné B. On comprend donc l'intérêt pour un éditeur tiers de choisir le nombre N de numéros courts.

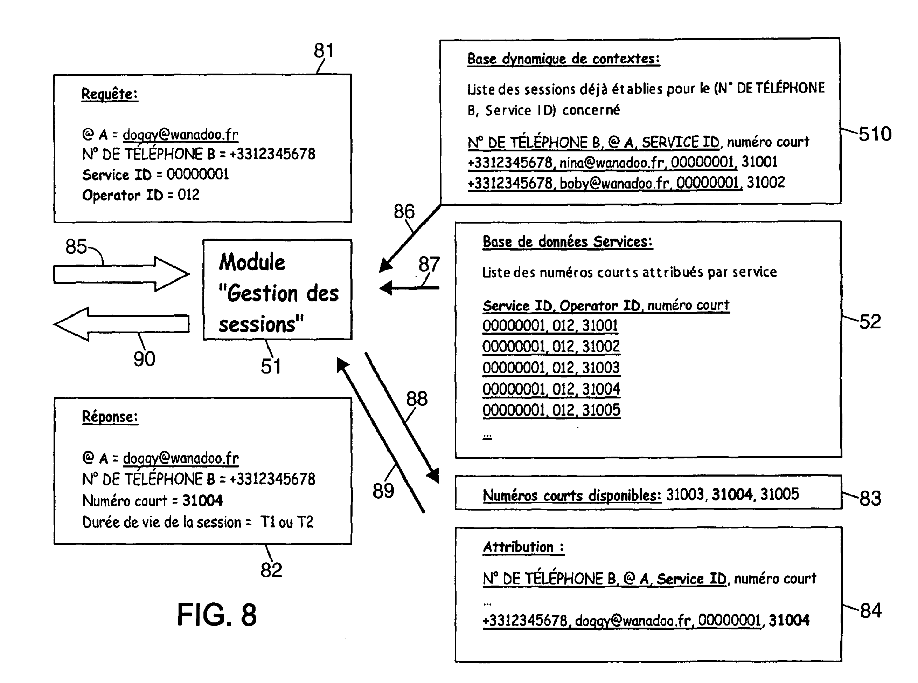

On décrit maintenant la gestion de sessions et en particulier l'attribution d'un numéro court, en référence à la figure 8.

Une requête 81 est envoyée (flèche 85) par le module 57 d'adaptation des messages au module 51 de gestion des sessions, via le module "*Opérateur ID*" 43. Les paramètres d'entrée sont (@A, N° DE TÉLÉPHONE B, Service ID, Operator ID).

La base dynamique de contextes 510 est interrogée (flèche 86) suivant le critère de recherche : N° DE TÉLÉPHONE B (pour le numéro de téléphone de l'utilisateur B).

Une vérification est ensuite faite sur la présence ou non du triplet (N° DE TÉLÉPHONE B, @A, SERVICE ID). Si le triplet est présent, la durée de vie de la session passe à T2 (flèche 90).

En revanche, si ce triplet est absent, la liste des numéros courts attribuée aux sessions existantes pour le couple (N° DE TÉLÉPHONE B, Service ID) est extraite et transférée vers un sous-module 83 qui contrôle et gère les numéros courts.

En parallèle, la base de données Services 52 est interrogée (flèche 87) avec les paramètres d'entrée (Service ID, Operator ID) et la liste des numéros courts autorisée par le service est extraite et transférée (flèche 88) au sous-module 83. Dans ce sous-module 83, les numéros courts réellement disponibles sont établis simplement grâce à un recoupement entre les listes extraites précédemment (flèches 86 et 87).

Le choix du numéro court attribué à la session, parmi ceux disponibles, peut être fait de manière aléatoire. Ce numéro est utilisé pour créer le contexte correspondant qui est enregistré dans la base dynamique de contextes 510. La durée de vie de la session ainsi créée est T1.

Le numéro court sélectionné est retourné au module 51 d'adaptation des messages (flèche 89), lequel formule alors la réponse 82, qui est ensuite envoyée (flèche 90) par le module *reply.*

On décrit brièvement ci-après l'état progressif des sessions.

Une session peut avoir plusieurs états suivant la période de validité de celle-ci, le nombre de messages échangés, le nombre de correspondants d'un mobile/WLAN/fixe ou les actions de l'administrateur de la brique "*Reply2*" au sens de l'invention. La brique "*Reply2*" gère avantageusement le mécanisme de sessions. Une session a un temps de vie paramétrable.

On décrit ci-après le cas d'une session expirée.
Si le client de l'éditeur tiers (A) ou l'utilisateur mobile/WLAN/fixe (B) envoie un message à travers la session qui vient d'expirer, un acquittement de délivrance négatif peut lui être retourné.

Il existe plusieurs cas d'expiration pour une session.

Le premier cas concerne un *timer* expiré. Dans ce contexte :
- A a envoyé vers B un message xMS,
- B a reçu le message et répond,
- A a réceptionné le message de réponse dans sa boîte xMS.

Si A et B arrêtent ensuite d'envoyer des messages et que la durée de vie de la session expire (*timer =* 0), il devient impossible de réutiliser cette session pour transférer des messages.

Typiquement, dans cet exemple, si B désire envoyer un message plus tard et que la session a expiré, la brique *"Reply2"* reçoit le message et tente de le délivrer à travers la session correspondante. Mais si aucune information relative à cette session n'est trouvée dans la base dynamique de contextes 510, la session est réputée expirée. Un message avertissant B lui est retourné et indique l'échec de l'envoi. Il faudra que l'utilisateur A ré-initie une nouvelle session pour dialoguer à nouveau avec B.

Un deuxième cas d'expiration pour une session consiste en un dépassement du nombre z maximum de messages xMS échangés pendant la durée de vie de la session.

La session est composée de plusieurs demandes et réponses relatives au contexte (@A, N° DE TÉLÉPHONE B, Service ID, numéro court associé). Comme indiqué ci-avant, la durée de vie de la session T1 est déterminée dans la base de données Services 52. Sa valeur T1 est prédéterminée. A l'initialisation de la session, le *timer* de la base dynamique de contextes est égal à T1 (en décrémentation jusqu'à 0). La durée de vie de la session est réinitialisée à T2 lorsqu'un message xMS venant de B est reçu.

Néanmoins, le compteur z dans la base de données Services 52 est décrémenté à chaque envoi de messages (une valeur 0 signifie par exemple que le nombre d'échanges peut être illimité). Quand le nombre z d'échanges est atteint, la session passe de l'état "active" à l'état "expirée".

Préférentiellement, de manière à éviter des collisions (création de deux contextes similaires suite à la réception de deux messages simultanément), la brique *"Reply2"* utilise des mécanismes séquentiels.

Un autre cas d'erreur possible est la saturation du service (plus aucune session disponible). Ce cas peut advenir côté client de l'éditeur tiers. Du fait que la boite *"Reply2"* met en oeuvre des sessions en utilisant des numéros courts, un même éditeur de contenu/marchand a une liste finie de numéros courts attribués (cinq par exemple). Une session étant associée au triplet (identifiant de service, identifiant de l'émetteur, identifiant du destinataire), le risque de saturation provient de l'établissement de sessions à un même instant t vers un même destinataire mobile et pour un service donné de communications/sessions.

Ainsi, si un abonné mobile/WLAN/fixe B doit recevoir de nombreux messages provenant de différentes personnes A au même moment (ce qui advient rarement), la limite du nombre de sessions autorisées peut être atteinte. Si un utilisateur tente d'envoyer un message vers cet abonné, alors la brique *"Reply2"* lui retourne un message d'erreur lui indiquant la saturation momentanée du service.

Pour assouplir le fonctionnement de la brique *"Reply2"* au sens de l'invention, en particulier dans le cas d'une session expirée ou d'une saturation de service, un état supplémentaire, de transition, dans lequel la session peut se trouver, a été prévu. Cet état est dit "*en cours d'expiration*" et est typiquement entre l'état actif et l'état expiré. Cet état se définit comme suit.

Quand une session atteint la fin de sa période de validité (durée initiée lors de la création de la session), la brique *"Reply2"* passe l'état de la session de l'état actif à l'état "*en cours d'expiration*". A ce moment, la session existe toujours et n'est pas encore expirée. Cet état transitoire permet d'avoir une plus grande flexibilité dans l'utilisation des sessions car, au cours de l'intervalle de temps dans lequel la session est en "*en cours d'expiration",* un message envoyé par un utilisateur peut toujours réactiver la session.

Cette réactivation peut s'effectuer dans ce contexte :
- un client A d'un éditeur de services envoie un message à un terminal mobile/WLAN/fixe B,
- l'utilisateur mobile/WLAN/fixe B répond et le client A reçoit le message dans sa boîte de réception xMS.

Si aucun autre échange n'est effectué dans le délai prédéterminé et fixé dans la brique "*Reply2*", la session passe à l'état "*en cours d'expiration"* puis à l'état "*expirée*" après un deuxième délai d'attente transitoire (qui peut être paramétré).

Dans un premier cas, la session peut être réactivée par l'utilisateur mobile/WLAN/fixe B comme suit :
- le client de l'opérateur mobile/WLAN/fixe B envoie un message à l'utilisateur A,
- la brique "*Reply2*" vérifie si une session active correspondante est présente. Si tel n'est pas le cas, la brique "*Reply2*" recherche une session "*en cours d'expiration*" correspondante. Si cette session est bien répertoriée, alors elle est réactivée.

Dans un deuxième cas, la session peut être réactivée par l'utilisateur A comme suit :
- l'utilisateur A envoie un message à un utilisateur mobile/WLAN/fixe B,
- la brique "*Reply2*" recherche un numéro court disponible pour créer une session. Si durant sa recherche une session active est trouvée, alors elle est utilisée. En outre, si une session "*en cours d'expiration*" est trouvée, la session est réactivée.

Par ailleurs, comme le nombre de sessions actives et/ou *"en cours d'expiration"* est préférentiellement limité, si nécessaire, on libère une session qui est dans l'état "*en cours d'expiration",* en la faisant passer à l'état expiré, afin de réallouer un numéro court pour générer une nouvelle session.

Ainsi, on accorde un état transitoire à la session entre état actif et état expiré. Cet état, dit "*en cours d'expiration*", permet une plus grande flexibilité de mise en oeuvre dans le sens où :
- une session *"en cours d'expiration"* peut être réactivée à l'initiative de l'entité A ou B,
- une session *"en cours d'expiration"* peut être mise à l'état expiré notamment dans le cas d'une saturation de services, afin de générer une nouvelle session à activer.

Enfin, une session peut être réputée "*suspendue*" par l'administrateur de la brique "*Reply2*". Le *timer* est alors figé pendant une période momentanée et plus aucun message xMS ne peut être échangé pendant cette période.

Bien entendu, la présente invention ne se limite pas à la forme de réalisation décrite ci-avant à titre d'exemple et admet des variantes.

Ainsi, on comprendra par exemple que, dans une réalisation moins sophistiquée, seule l'adresse de l'émetteur A peut être stockée en correspondance du numéro court dans la base 510, en particulier si le nombre de numéros courts attribués à un éditeur de services est illimité.

## Revendications

1. Procédé de traitement d'un échange de messages entre une première entité communicante et au moins une deuxième entité communicante,
la première entité étant cliente d'un éditeur de services, le procédé comportant :
a) une étape dans laquelle la première entité émet un premier message comportant, en en-tête, un identifiant de la première entité et un identifiant de la deuxième entité, au moins,
b) une étape d'affectation au premier message d'une référence et de stockage en mémoire, au moins temporaire, de ladite référence en correspondance au moins de l'identifiant de la première entité,
c) une étape dans laquelle le premier message est véhiculé via au moins un réseau de télécommunication vers la deuxième entité en fonction de l'identifiant de la deuxième entité,
d) une étape dans laquelle la deuxième entité envoie, en réponse au premier message, un deuxième message avec ladite référence en en-tête, en tant qu'identifiant de destinataire,
e) une étape de lecture de la référence dans l'en-tête du deuxième message, pour retrouver dans ladite mémoire, en fonction de la référence, l'identifiant de la première entité, et
f) une étape de transmission du deuxième message à la première entité, en fonction de l'identifiant de la première entité,
**caractérisé en ce que** l'étape b) comporte :
b0) avant d'affecter une référence au premier message, une opération d'identification d'un opérateur de la deuxième entité communicante, et de sélection de ladite référence dans une liste de références réservée par l'éditeur de services auprès de l'opérateur identifié.

2. Procédé selon la revendication 1, **caractérisé en ce qu'**il comporte :
- une étape de stockage, en outre dans ladite mémoire et en correspondance de la référence, de l'identifiant de la deuxième entité,
- pour retrouver dans la mémoire l'identifiant de la première entité, à la fois en fonction de la référence et au moins de l'identifiant de la deuxième entité.

3. Procédé selon la revendication 2, **caractérisé en ce que** la référence est stockée en mémoire, en correspondance d'un triplet comportant :
- un identifiant de la première entité (A),
- un identifiant de la deuxième entité (B),
- et un identifiant de service (service ID),
et **en ce que** l'identifiant de la première entité est retrouvé à partir de la référence, de l'identifiant de la deuxième entité et de l'identifiant de service.

4. Procédé selon la revendication 3, **caractérisé en ce qu'**une liste restreinte de références possibles est affectée initialement à l'éditeur de service, avec une possibilité d'affecter une même référence pour des échanges impliquant deux deuxièmes entités (B) différentes et/ou impliquant deux services différents, tandis que l'identifiant de la deuxième entité (B) et l'identifiant de service (service ID) contribuent à augmenter la sélectivité de la recherche de l'identifiant de la première entité (A) en fonction de la référence.

5. Procédé selon l'une des revendications précédentes, **caractérisé en ce que** ladite référence est un numéro court comportant moins de digits que l'identifiant de la première entité.

6. Procédé selon la revendication 5, **caractérisé en ce que** le numéro court comporte entre trois et cinq digits.

7. Procédé selon l'une des revendications précédentes, **caractérisé en ce que** l'étape b) comporte l'ouverture d'une session d'allocation de référence pour l'échange de messages entre lesdites première et deuxième entités, et **en ce que** ladite session comporte une durée de validité prédéterminée, autorisant, pendant ladite durée de validité, l'utilisation de ladite référence pour émettre, en réponse au premier message, au moins un deuxième message.

8. Procédé selon la revendication 7, **caractérisé en ce que** l'on accorde une première durée de validité (T1) à une session, lors de la transmission du premier message, et une deuxième durée de validité (T2) à la même session, lors de la transmission du deuxième message.

9. Procédé selon l'une des revendications 7 et 8, **caractérisé en ce qu'**on affecte en outre à une session un état *"en cours d'expiration",* intermédiaire entre un état actif et un état expiré, dans lequel une session, dont la durée de validité est périmée, est susceptible d'être réactivée en cas d'identification d'un message comportant une référence associée, dans ladite mémoire, à un état "*en cours d'expiration".*

10. Procédé selon la revendication 9, **caractérisé en ce que** l'on prévoit un nombre limité de sessions actives et de sessions *"en cours d'expiration*", et **en ce qu'**une session passe de l'état *"en cours d'expiration"* à l'état expiré pour générer une nouvelle session à activer.

11. Procédé selon l'une des revendications 7 à 10, **caractérisé en ce que** l'on accorde en outre un nombre maximum (z) de messages échangés pendant une session.

12. Procédé selon l'une des revendications précédentes, **caractérisé en ce que** le ou les réseaux de télécommunication comportent au moins un réseau fixe et/ou un réseau cellulaire et/ou un réseau radiofréquence de type WLAN.

13. Procédé selon l'une des revendications précédentes, **caractérisé en ce que** ladite mémoire est hiérarchisée selon une base de données (510), en fonction desdites références.

14. Procédé selon l'une des revendications précédentes, **caractérisé en ce que** les messages sont de type MMS et/ou SMS.

15. Procédé selon l'une des revendications précédentes, **caractérisé en ce que** les étapes b), e) et f), au moins, sont mises en oeuvre au sein d'un dispositif relais (40) comportant ladite mémoire (510) et interconnecté avec ledit un ou plusieurs réseaux de télécommunication.

16. Dispositif relais (40), **caractérisé en ce qu'**il comporte des moyens pour la mise en oeuvre des étapes du procédé selon la revendication 15, ces moyens comportant au moins :
- une ou plusieurs interfaces (41,44) avec ledit un ou plusieurs réseaux, et
- un module (42) de contrôle d'attribution et de gestion des références.

17. Dispositif selon la revendication 16, **caractérisé en ce que** ledit module (42) inclut ladite mémoire, en tant que base de données (510) hiérarchisée en fonction desdites références.

18. Dispositif selon la revendication 17, **caractérisé en ce qu'**il comporte en outre des moyens pour la mise en oeuvre des étapes du procédé selon la revendication 3, **en ce que** ledit module (51) est agencé pour coopérer avec une deuxième base (52) de données propre à différents types de services, et **en ce que** ladite deuxième base est agencée pour stocker en outre un ou des identifiant(s) d'opérateur(s) (*operator ID*) dudit un ou plusieurs réseaux.

19. Dispositif selon la revendication 18, **caractérisé en ce qu'**il comporte des moyens (60) pour coopérer avec un module (44) de routage des premiers messages vers l'opérateur du réseau auquel la deuxième entité est reliée, et d'adaptation des premiers messages à un protocole de ce réseau (*xMS broker*).

20. Dispositif selon l'une des revendications 18 et 19, **caractérisé en ce qu'**il comporte en outre des moyens (59) pour coopérer avec un module (43) d'identification dudit (desdits) opérateur(s).

21. Dispositif selon l'une des revendications 16 à 20, **caractérisé en ce qu'**il comporte en outre une mémoire de stockage temporaire des messages, en tant que base de données des messages reçus (58), pour mettre en attente de traitement des messages nouvellement reçus.

22. Dispositif selon l'une des revendications 16 à 21, **caractérisé en ce qu'**il comporte en outre un module (57) d'adaptation des messages agencé pour coopérer avec le module (51) de contrôle d'attribution et de gestion des références, pour :
- recevoir une référence attribuée,
- désencapsuler un message reçu de la première entité,
- modifier l'en-tête d'un message en remplaçant l'identifiant de la première entité par ladite référence attribuée,
- encapsuler ledit message reçu, avec l'en-tête comportant la référence, pour une transmission vers la deuxième entité.

23. Dispositif selon l'une des revendications 16 à 22, **caractérisé en ce qu'**il est agencé pour coopérer avec une interface (41) d'adaptation d'un format des messages issus et/ou à destination de la première entité, incluant un ou plusieurs convertisseurs de protocole.

24. Produit programme informatique, destiné à être stocké dans une mémoire d'un dispositif relais selon l'une des revendications 16 à 23, ou sur un support mémoire amovible destiné à coopérer avec un lecteur que comporte ledit dispositif relais,
**caractérisé en ce qu'**il comporte des instructions pour la mise en oeuvre des opérations des étapes b), e) et f) du procédé selon l'une des revendications 1 à 15.

## Claims

1. Method for processing an exchange of messages between a first communicating entity and at least one second communicating entity,
the first entity being a customer of a service publisher, the method comprising:
a) a step in which the first entity sends a first message comprising, as header, an identifier of the first entity and an identifier of the second entity, at least,
b) a step of assigning a reference to the first message and of storing in memory, at least temporarily, said reference in correspondence at least with the identifier of the first entity,
c) a step in which the first message is conveyed via at least one telecommunication network to the second entity as a function of the identifier of the second entity,
d) a step in which the second entity dispatches, in response to the first message, a second message with said reference in the header, as identifier of the recipient,
e) a step of reading the reference in the header of the second message, so as to retrieve from said memory, as a function of the reference, the identifier of the first entity, and
f) a step of transmitting the second message to the first entity, as a function of the identifier of the first entity,
**characterized in that** step b) comprises:
b0) before assigning a reference to the first message, an operation of identifying an operator of the second communicating entity, and of selecting said reference from a list of references that is reserved by the service publisher with the identified operator.

2. Method according to Claim 1, **characterized in that** it comprises:
- a step of storing, furthermore in said memory, in correspondence with the reference, the identifier of the second entity,
- so as to retrieve from the memory the identifier of the first entity, at one and the same time as a function of the reference and at least of the identifier of the second entity.

3. Method according to Claim 2, **characterized in that** the reference is stored in memory, in correspondence with a triplet comprising:
- an identifier of the first entity (A),
- an identifier of the second entity (B),
- and a service identifier (service ID),
and **in that** the identifier of the first entity is retrieved on the basis of the reference, of the identifier of the second entity and of the service identifier.

4. Method according to Claim 3, **characterized in that** a restricted list of possible references is initially assigned to the service publisher, with a possibility of assigning one and the same reference for exchanges involving two different second entities (B) and/or involving two different services, while the identifier of the second entity (B) and the service identifier (service ID) contribute to increasing the selectivity of the search for the identifier of the first entity (A) as a function of the reference.

5. Method according to one of the preceding claims, **characterized in that** said reference is a short number comprising fewer digits than the identifier of the first entity.

6. Method according to Claim 5, **characterized in that** the short number comprises between three and five digits.

7. Method according to one of the preceding claims, **characterized in that** step b) comprises the opening of a reference allocation session for the exchange of messages between said first and second entities,
and **in that** said session comprises a predetermined duration of validity, authorizing, for said duration of validity, the use of said reference to send, in response to the first message, at least one second message.

8. Method according to Claim 7, **characterized in that** a first duration of validity (T1) is granted to a session, during the transmission of an initial message, and a second duration of validity (T2) is granted to the same session, during the transmission of the second message.

9. Method according to one of Claims 7 and 8, **characterized in that** a session is furthermore assigned an "*expiry in progress*" state, intermediate between an active state and an expired state, in which a session, whose duration of validity has lapsed, is liable to be reactivated in the event of identification of a message comprising a reference associated, in said memory, with an "*expiry in progress*" state.

10. Method according to Claim 9, **characterized in that** a limited number of active sessions and of "expiry in progress" sessions is provided, and **in that** a session passes from the "expiry in progress" state to the expired state so as to generate a new session to be activated.

11. Method according to one of Claims 7 to 10, **characterized in that** a maximum number (z) of messages exchanged during a session is furthermore granted.

12. Method according to one of the preceding claims, **characterized in that** the telecommunication network or networks comprise at least one fixed network and/or one cellular network and/or one radiofrequency network of WLAN type.

13. Method according to one of the preceding claims, **characterized in that** said memory is hierarchized according to a data base (510), as a function of said references.

14. Method according to one of the preceding claims, **characterized in that** the messages are of MMS and/or SMS type.

15. Method according to one of the preceding claims, **characterized in that** steps b), e) and f), at least, are implemented within a relay device (40) comprising said memory (510) and interconnected with said one or more telecommunication networks.

16. Relay device (40), **characterized in that** it comprises means for implementing the steps of the method according to Claim 15, these means comprising at least:
- one or more interfaces (41, 44) with said one or more networks, and
- a control module (42) for allocating and managing the references.

17. Device according to Claim 16, **characterized in that** said module (42) includes said memory, as a data base (510) hierarchized as a function of said references.

18. Device according to Claim 17, **characterized in that** it furthermore comprises means for implementing the steps of the method according to Claim 3, **in that** said module (51) is designed to cooperate with a second data base (52) specific to various types of services, and **in that** said second base is designed to store furthermore one or more identifier(s) of operator(s) (*operator ID*) of said one or more networks.

19. Device according to Claim 18, **characterized in that** it comprises means (60) for cooperating with a module (44) for routing the first messages to the operator of the network to which the second entity is linked, and for adapting the first messages to a protocol of this network (*xMS broker*).

20. Device according to one of Claims 18 and 19, **characterized in that** it furthermore comprises means (59) for cooperating with a module (43) for identifying said operator(s).

21. Device according to one of Claims 16 to 20, **characterized in that** it furthermore comprises a memory for temporarily storing the messages, as a data base of the received messages (58), so as to place newly received messages on standby awaiting processing.

22. Device according to one of Claims 16 to 21, **characterized in that** it furthermore comprises a module (57) for adapting the messages which is designed to cooperate with the control module (51) for allocating and managing the references, so as to:
- receive an allocated reference,
- de-encapsulate a message received from the first entity,
- modify the header of a message by replacing the identifier of the first entity with said allocated reference,
- encapsulate said message received, with the header comprising the reference, for transmission to the second entity.

23. Device according to one of Claims 16 to 22, **characterized in that** it is designed to cooperate with an interface (41) for adapting a format of the messages arising from and/or destined for the first entity, including one or more protocol converters.

24. Computer program product, intended to be stored in a memory of a relay device according to one of Claims 16 to 23, or on a removable memory medium intended to cooperate with a reader that said relay device comprises,
**characterized in that** it comprises instructions for implementing all or some of the operations of steps b), e) and f) of the method according to one of Claims 1 to 15.

## Patentansprüche

1. Verfahren zur Verarbeitung eines Mitteilungsaustauschs zwischen einer ersten kommunizierenden Einheit und mindestens einer zweiten kommunizierenden Einheit,
wobei die erste Einheit Kundin eines Diensteditors ist, wobei das Verfahren aufweist:
a) einen Schritt, in dem die erste Einheit eine erste Mitteilung sendet, die in der Kopfzeile mindestens eine Kennung der ersten Einheit und eine Kennung der zweiten Einheit aufweist,
b) einen Schritt des Zuweisens einer Referenz zur ersten Mitteilung und des zumindest vorübergehenden Speicherns der Referenz in Verbindung mindestens mit der Kennung der ersten Einheit,
c) einen Schritt, in dem die erste Mitteilung über mindestens ein Telekommunikationsnetz in Abhängigkeit von der Kennung der zweiten Einheit zur zweiten Einheit übermittelt wird,
d) einen Schritt, in dem die zweite Einheit als Antwort auf die erste Mitteilung eine zweite Mitteilung mit der Referenz in der Kopfzeile als Empfängerkennung sendet,
e) einen Schritt des Lesens der Referenz in der Kopfzeile der zweiten Mitteilung, um im Speicher in Abhängigkeit von der Referenz die Kennung der ersten Einheit wiederzufinden, und
f) einen Schritt der Übertragung der zweiten Mitteilung an die erste Einheit in Abhängigkeit von der Kennung der ersten Einheit,
**dadurch gekennzeichnet, dass** der Schritt b) aufweist:
b0)vor dem Zuweisen einer Referenz zur ersten Mitteilung, einen Vorgang der Identifikation eines Betreibers der zweiten kommunizierenden Einheit und der Auswahl der Referenz aus einer Liste von Referenzen, die vom Diensteditor beim identifizierten Betreiber reserviert wird.

2. Verfahren nach Anspruch 1, **dadurch gekennzeichnet, dass** es aufweist:
- einen Schritt des zusätzlichen Speicherns der Kennung der zweiten Einheit im Speicher und in Verbindung mit der Referenz,
- um im Speicher die Kennung der ersten Einheit zugleich in Abhängigkeit von der Referenz und mindestens von der Kennung der zweiten Einheit wiederzufinden.

3. Verfahren nach Anspruch 2, **dadurch gekennzeichnet, dass** die Referenz im Speicher in Verbindung mit einem Triplet gespeichert wird, das aufweist:
- eine Kennung der ersten Einheit (A),
- eine Kennung der zweiten Einheit (B),
- und eine Dienstkennung (service ID),
und dass die Kennung der ersten Einheit ausgehend von der Referenz, der Kennung der zweiten Einheit und der Dienstkennung wiedergefunden wird.

4. Verfahren nach Anspruch 3, **dadurch gekennzeichnet, dass** eine beschränkte Liste von möglichen Referenzen ursprünglich dem Diensteditor zugewiesen ist, mit einer Möglichkeit, die gleiche Referenz für Austauschvorgänge zuzuweisen, die zwei unterschiedliche zweite Einheiten (B) und/oder zwei unterschiedliche Dienste implizieren, während die Kennung der zweiten Einheit (B) und die Dienstkennung (service ID) dazu beitragen, die Selektivität der Suche nach der Kennung der ersten Einheit (A) in Abhängigkeit von der Referenz zu erhöhen.

5. Verfahren nach einem der vorhergehenden Ansprüche, **dadurch gekennzeichnet, dass** die Referenz eine kurze Nummer ist, die weniger Stellen als die Kennung der ersten Einheit aufweist.

6. Verfahren nach Anspruch 5, **dadurch gekennzeichnet, dass** die kurze Nummer zwischen drei und fünf Stellen aufweist.

7. Verfahren nach einem der vorhergehenden Ansprüche, **dadurch gekennzeichnet, dass** der Schritt b) das Eröffnen einer Referenzzuordnungssitzung für den Austausch von Mitteilungen zwischen der ersten und der zweiten Einheit aufweist, und dass die Sitzung eine vorbestimmte Gültigkeitsdauer aufweist und während der Gültigkeitsdauer die Verwendung der Referenz erlaubt, um als Antwort auf die erste Mitteilung mindestens eine zweite Mitteilung zu senden.

8. Verfahren nach Anspruch 7, **dadurch gekennzeichnet, dass** einer Sitzung bei der Übertragung der ersten Mitteilung eine erste Gültigkeitsdauer (T1) bewilligt wird, und der gleichen Sitzung bei der Übertragung der zweiten Mitteilung eine zweite Gültigkeitsdauer (T2) bewilligt wird.

9. Verfahren nach einem der Ansprüche 7 und 8, **dadurch gekennzeichnet, dass** außerdem einer Sitzung ein Zustand "ablaufend" zwischen einem aktiven Zustand und einem abgelaufenen Zustand zugewiesen wird, während dem eine Sitzung, deren Gültigkeitsdauer abgelaufen ist, im Fall einer Identifikation einer Mitteilung reaktiviert werden kann, die eine Referenz aufweist, die im Speicher einem Zustand "ablaufend" zugeordnet ist.

10. Verfahren nach Anspruch 9, **dadurch gekennzeichnet, dass** eine begrenzte Zahl von aktiven Sitzungen und von "ablaufenden" Sitzungen vorgesehen wird, und dass eine Sitzung vom Zustand "ablaufend" in den abgelaufenen Zustand übergeht, um eine neue zu aktivierende Sitzung zu erzeugen.

11. Verfahren nach einem der Ansprüche 7 bis 10, **dadurch gekennzeichnet, dass** außerdem eine maximale Zahl (z) von während einer Sitzung ausgetauschten Mitteilungen bewilligt wird.

12. Verfahren nach einem der vorhergehenden Ansprüche, **dadurch gekennzeichnet, dass** das oder die Telekommunikationsnetze mindestens ein Festnetz und/oder ein zellulares Netz und/oder ein Hochfrequenznetz vom Typ WLAN aufweist.

13. Verfahren nach einem der vorhergehenden Ansprüche, **dadurch gekennzeichnet, dass** der Speicher gemäß einer Datenbank (510) in Abhängigkeit von den Referenzen hierarchisiert wird.

14. Verfahren nach einem der vorhergehenden Ansprüche, **dadurch gekennzeichnet, dass** die Mitteilungen vom Typ MMS und/oder SMS sind.

15. Verfahren nach einem der vorhergehenden Ansprüche, **dadurch gekennzeichnet, dass** mindestens die Schritte b), e) und f) innerhalb einer Relaisvorrichtung (40) durchgeführt werden, die den Speicher (510) enthält und mit dem einen oder den mehreren Telekommunikationsnetzen verbunden ist.

16. Relaisvorrichtung (40), **dadurch gekennzeichnet, dass** sie Mittel zur Durchführung der Schritte des Verfahrens nach Anspruch 15 aufweist, wobei diese Mittel mindestens aufweisen:
- eine oder mehrere Schnittstellen (41, 44) mit dem einen oder den mehreren Netzen, und
- ein Modul (42) zur Zuteilungsüberwachung und zur Verwaltung der Referenzen.

17. Vorrichtung nach Anspruch 16, **dadurch gekennzeichnet, dass** das Modul (42) den Speicher als in Abhängigkeit von den Referenzen hierarchisierte Datenbank (510) umfasst.

18. Vorrichtung nach Anspruch 17, **dadurch gekennzeichnet, dass** sie außerdem Mittel zur Durchführung der Schritte des Verfahrens nach Anspruch 3 aufweist, dass das Modul (51) eingerichtet ist, um mit einer zweiten Datenbank (52) zusammenzuwirken, die für verschiedene Diensttypen spezifisch ist, und dass die zweite Bank eingerichtet ist, um außerdem eine oder mehrere Betreiberkennungen (operator ID) des einen oder der mehreren Netze zu speichern.

19. Vorrichtung nach Anspruch 18, **dadurch gekennzeichnet, dass** sie Mittel (60) aufweist, um mit einem Modul (44) zum Routen der ersten Mitteilungen zum Betreiber des Netzes, mit dem die zweite Einheit verbunden ist, und zum Anpassen der ersten Mitteilungen an ein Protokoll dieses Netzes (xMS broker) zusammenzuwirken.

20. Vorrichtung nach einem der Ansprüche 18 und 19, **dadurch gekennzeichnet, dass** sie außerdem Mittel (59) aufweist, um mit einem Identifikationsmodul (43) des (der) Betreibers (Betreiber) zusammenzuwirken.

21. Vorrichtung nach einem der Ansprüche 16 bis 20,
**dadurch gekennzeichnet, dass** sie außerdem einen Speicher zur vorübergehenden Speicherung der Mitteilungen als Datenbank der empfangenen Mitteilungen (58) aufweist, um neu empfangene Mitteilungen in Verarbeitungs-Wartestellung zu bringen.

22. Vorrichtung nach einem der Ansprüche 16 bis 21, **dadurch gekennzeichnet, dass** sie außerdem ein Modul (57) zur Anpassung der Mitteilungen aufweist, das eingerichtet ist, um mit dem Modul (51) zur Zuteilungsüberwachung und Verwaltung der Referenzen zusammenzuwirken, um:
- eine zugeteilte Referenz zu empfangen,
- eine von der ersten Einheit empfangene Mitteilung zu entkapseln,
- die Kopfzeile einer Mitteilung zu verändern, indem die Kennung der ersten Einheit durch die zugeteilte Referenz ersetzt wird,
- die empfangene Mitteilung mit der die Referenz enthaltenden Kopfzeile für eine Übertragung zur zweiten Einheit zu verkapseln.

23. Vorrichtung nach einem der Ansprüche 16 bis 22, **dadurch gekennzeichnet, dass** sie eingerichtet ist, um mit einer Schnittstelle (41) zur Anpassung eines Formats der Mitteilungen zusammenzuwirken, die von der ersten Einheit stammen und/oder für sie bestimmt sind, einschließlich eines oder mehrerer Protokollwandler.

24. Computerprogrammprodukt, das dazu bestimmt ist, in einem Speicher einer Relaisvorrichtung nach einem der Ansprüche 16 bis 23 oder auf einem entfernbaren Speicherträger gespeichert zu werden, der dazu bestimmt ist, mit einem Lesegerät zusammenzuwirken, das die Relaisvorrichtung enthält,
**dadurch gekennzeichnet, dass** es Anweisungen für die Durchführung der Vorgänge der Schritte b), e) und f) des Verfahrens nach einem der Ansprüche 1 bis 15 enthält.
